# EUROPÄISCHE PATENTANMELDUNG

(11) **EP 4 831 686 A1**
(43) Veröffentlichungstag der Anmeldung: **28.10.2026**
(21) Anmeldenummer: 26171038.8
(22) Anmeldetag: 07.04.2026
(51) Int. Cl.: G01S 13/84, G01S 11/02, H04B 17/20, H04B 17/26, H04B 17/27

(54) **VERFAHREN UND VORRICHTUNG ZUR VERBESSERUNG DER WIEDERHOLTEN BESTIMMUNG EINES ABSTANDES ODER EINER ORIENTIERUNG MITTELS FUNKSIGNALEN**

(30) Priorität: 23.04.2025 DE 102025115624; 12.08.2025 EP 25195466; 02.10.2025 EP 25206530
(71) Anmelder: Lambda: 4 Entwicklungen GmbH, 22299 Hamburg (DE)
(72) Erfinder: Reimann, Rönne, 22299 Hamburg (DE)
(74) Vertreter: Raffay & Fleck

(57) **Zusammenfassung**

Die Erfindung betrifft ein Verfahren und eine entsprechende Vorrichtung zur Verbesserung der wiederholten Bestimmung eines Abstandes, Winkels und/oder einer Orientierung mittels Funksignalen.

Vorrichtungen weisen häufig unterschiedliche Hardware oder unterschiedliche Ansteuerung dieser auf.

Aufgabe der vorliegenden Erfindung ist es, die wiederholte Bestimmung, insbesondere bei unterschiedlicher Hardware, der Objekte zu optimieren.

Gelöst wird die Aufgabe dadurch, dass erkannte Eigenschaften der Objekte gespeichert werden und bei späteren Bestimmungen darauf zurückgegriffen wird. Dabei können Eigenschaften eines einzelnen Objekts gespeichert werden oder einer Untermenge der Gesamtheit der Objekte oder einer Gruppe, insbesondere Paar, von Objekten, gespeichert und später genutzt werden. Zudem soll optional die Sicherheit einer über eine Funkverbindung erfolgende Autorisierung verbessert werden, was ebenfalls durch die Nutzung der gespeicherten Eigenschaften möglich ist. Zudem kann zur weiteren Erhöhung der Sicherheit eine Speicherung nur dann erfolgen, wenn bestimmte Sicherheitsmerkmale oder andere Anforderungen erfüllt sind.

## Beschreibung

Die Erfindung betrifft ein Verfahren und eine entsprechende Vorrichtung zur Verbesserung der wiederholten Bestimmung eines Abstandes, Winkels und/oder einer Orientierung mittels Funksignalen.

In vielen Fällen wird zwischen bestimmten Objekten, insbesondere ein Paar von Objekten, wiederholt die Entfernung und/oder ein Winkel, insbesondere die relative Orientierung, bestimmt. Zudem wird dies in einer Gruppe von Objekten häufig mehrfach zwischen wechselnden Untermengen, insbesondere Paaren, aus den Objekten der Gruppe durchgeführt.

Dabei weisen die Vorrichtungen häufig unterschiedliche Hardware oder unterschiedliche Ansteuerung dieser auf, die unterschiedliche oder keine Optimierungen der Bestimmung zulässt. Einerseits ist es zwar nachteilig immer das schlechteste Szenario anzunehmen, andererseits führt die Annahme besserer Szenarien zu Problemen, wenn in der Tat ein schlechteres Szenario vorliegt. Zudem ist die Bestimmung der sinnvoll möglichen Optimierungen oder des vorliegenden Szenarios aufwändig, insbesondere mit Zeit- und Energieverlust behaftet.

Aufgabe der vorliegenden Erfindung ist es, die wiederholte Bestimmung, insbesondere bei unterschiedlicher Hardware (insbesondere derart, dass unterschiedliche Optimierungen zwischen unterschiedlichen Paaren möglich sind) der Objekte zu optimieren. Optimierungen können sich dabei beispielsweise auf Geschwindigkeit, Energie als auch Sicherheitsmerkmal beziehen.

Unterschiede in der Hardware ergeben sich zum Beispiel aus der Verwendung unterschiedlicher Chipsets, insbesondere unterschiedlicher Bluetoothchipsets, unterschiedlicher Filter, unterschiedlicher Verstärker aber auch aus der unterschiedlichen Ansteuerung dieser. Aber selbst mit Hardware derselben Bezeichung/des selben Typs der Hardware erstellte Objekte können entsprechende Unterschiede aufweisen, beispielsweise durch Schwankungen in der Produktion.

Gelöst wird die Aufgabe, grob umrissen, dadurch, dass erkannte Eigenschaften der Objekte gespeichert werden und bei späteren Bestimmungen darauf zurückgegriffen wird. Dabei können Eigenschaften eines einzelnen Objekts gespeichert werden oder einer Untermenge der Gesamtheit der Objekte oder einer Gruppe, insbesondere Paar, von Objekten, gespeichert und später genutzt werden. Zudem soll optional die Sicherheit einer über eine Funkverbindung erfolgenden Autorisierung verbessert werden, was ebenfalls durch die Nutzung der gespeicherten Eigenschaften möglich ist. Zudem kann zur weiteren Erhöhung der Sicherheit eine Speicherung nur dann erfolgen, wenn bestimmte Sicherheitsmerkmale oder andere Anforderungen erfüllt sind.

Gelöst wird die Aufgabe durch ein Verfahren zur wiederholten Bestimmung des Abstandes und/oder eines Winkels und/oder Orientierung (im Folgenden auch nur "Bestimmung") zwischen mindestens zwei Objekten auf Basis von Messwerten an Funksignalen zwischen den mindestens zwei Objekten,
wobei paarweise zwischen zwei, einem ersten und einem zweiten der mindestens zwei Objekte, zumindest bezüglich eines ersten der zwei Objekte, insbesondere beider Objekte, bestimmt, insbesondere ausgelesen, wird, ob aus vorherigen Bestimmungen, zwischen den zwei Objekten, mindestens eine vorbestimmte Eigenschaft des ersten Objekts bekannt ist und
die Bestimmung abhängig vom Ergebnis des Auslesens durchgeführt wird,
wobei die vorbestimmte Eigenschaft mindestens eine aus den Folgenden ist:
   Maß der Abweichung zwischen PBR (phase based ranging, also phasenbasierte Entfernungsmessung) und TBR (time based ranging, also signallaufzeitbasierte Entfernungsmessung),
   problematische Frequenz(en),
   Phasenvorhersagbarkeit bei Frequenzwechsel,
   Konstantheit der Phase und/oder Amplitude zwischen Übertragungswiederholungen, insbesondere Subevents,
   Maß der Übertragungsrichtungsasymmetrie,
   nicht-Linearität der Phase bei Frequenzänderung, insbesondere ein Maß der nicht-Linearität
   und wobei
   bei Bekanntheit des Maßes der Abweichung zwischen PBR und TBR eine, insbesondere frequenzabhängige, Korrektur der Abweichung zwischen PBR- und TBR-Messung durchgeführt wird und/oder
      bei Bekanntheit mindestens einer problematischen Frequenz die Messwerte auf der mindestens einen problematischen Frequenz bei der Bestimmung niedriger gewichtet oder nicht berücksichtigt werden und/oder
      bei Bekanntheit der Phasenvorhersagbarkeit bei Frequenzwechsel keine 180°-Phasenambiguitätsentscheidung durchgeführt wird und/oder auf mindestens einer Frequenz eine oder zwei Einwegkanalmessungen anstelle einer Rundlaufmessung, also insbesondere der Messung basierend auf jeweils einem Hin- und einem Rückwegfunksignal, insbesondere bei der gleichen Frequenz, zur Bestimmung verwendet wird/werden und/oder die Anzahl der Frequenzen und/oder Antennenpfade, auf denen Messungen zur Bestimmung verwendet werden, reduziert wird und/oder
   bei Bekanntheit der Konstantheit der Phase und/oder Amplitude zwischen Wiederholungen Messungen auf den zu Beginn einer Wiederholung wiederholten Frequenzen zur Bestimmung neben den Messungen auf zu wiederholenden Frequenzen, insbesondere des unmittelbar, vorausgehenden Funksignals und/oder Funksignalaustauschs, die wiederholt werden, verwendet werden oder eine Auswahlentscheidung zwischen den Messungen auf zu wiederholenden Frequenzen und Messungen auf wiederholten Frequenzen erfolgt und/oder bei Bekanntheit der Konstantheit der Phase und/oder Amplitude kein Korrekturwert für Phase und/oder Amplitude zwischen den Wiederholungen bestimmt wird und/oder
   bei Bekanntheit des Maßes der Übertragungsrichtungsasymmetrie eine Korrektur der Messwerte zur Reduzierung der Übertragungsrichtungsasymmetrie in den Messwerten vorgenommen wird und/oder
   bei Bekanntheit der nicht-Linearität der Phase bei Frequenzänderung die Spanne der zur Bestimmung verwendeten Frequenzspanne angepasst wird, insbesondere bei höherer nicht-Linearität verringert wird und/oder, insbesondere bei Bekanntheit eines Maßes, eine Korrektur der Messwerte vorgenommen wird.

Dabei reicht es zur Verbesserung prinzipiell aus, eine der vorbestimmten Eigenschaften zu nutzen, also insbesondere zu bestimmen, zu speichern und auszulesen und bei der Bestimmung zu verwenden. Jede Unterkombination dieser vorbestimmten Eigenschaften steigert, je nach Szenario die Verbesserung gegenüber der Nutzung nur einer. Die Steigerung der verwendeten Anzahl steigert die Verbesserung, je nach Szenario weiter. Sofern hier vorteilhafte Ausgestaltungen für vorbestimmte Eigenschaften angegeben werden, gilt dies analog auch für nur eine vorbestimmte Eigenschaft.

Das Maß der Abweichung zwischen PBR und TBR kann eine, insbesondere zumindest frequenzabhängige Korrektur beinhalten, z.B. einen Offset-Wert und/oder einen Korrekturfaktor.

Die problematische Frequenz(en) können insbesondere eine Liste von bei Messungen für die Bestimmung problematischen Frequenzen beinhalten und/oder sein.

Die problematische Frequenz(en) ist/sind insbesondere solche, bei denen Störungen der Übertragung und/oder Messungen zu erwarten sind und/oder wiederholt beobachtet wurden, die insbesondere eine vorbestimmte oder unter Nutzung von Messungen bestimmte Grenze überschreiten. Dabei kann es sich zum Beispiel um die Frequenzen der Oberwellen eines Quarzes des Objekts.

Derartige problematische Frequenzen können beispielsweise wie folgt aufgefunden werden:
Bei mehreren Funkübertragungen auf verschiedenen Frequenzen nimmt man eine Glättung des Verlaufs eines I/Q-, eines I- und/oder eines Q-, eines Amplituden- und/oder Phasen-Wertes, insbesondere eine Änderung durch die Übertragung, über den Frequenzgang vor und bestimmt für jede Übertragung die Abweichung zum geglätteten Verlauf. Daraus lässt sich, gegebenenfalls unter Außerachtlassen von ausreißenden Werten, eine mittlere Abweichung bestimmen. Wird bei einer Frequenz wiederholt oder mit einer relativen Häufigkeit höher als eine vorgegebene relative Häufigkeit, von z.B. 10%, eine die mittlere Abweichung um mehr als einen vorgegebenen Faktor, von beispielsweise 2 oder 3, übersteigende Abweichung festgestellt, kann diese Frequenz als problematische Frequenz klassifiziert werden.

Die Eigenschaft der Phasenvorhersagbarkeit bei Frequenzwechsel kann z.B. ein binärer Parameter sein und/oder angeben, welche Berechnung zur Vorhersage erforderlich ist.

Die Eigenschaft Konstantheit der Phase und/oder Amplitude zwischen Übertragungswiederholungen, insbesondere Subevents, kann, insbesondere jeweils für Phase und Amplitude, ein binärer Parameter sein.

Die Eigenschaft Maß der Übertragungsrichtungsasymmetrie kann insbesondere angeben, ob eine Korrektur möglich und sinnvoll ist, eine Korrektur nicht möglich ist und/oder ob eine Korrektur nicht erforderlich ist. Alternativ und/oder zusätzlich kann es Informationen enthalten, die zur Korrektur zu verwenden sind. Insbesondere bei diesem Merkmal kann es sinnvoll sein, dies nicht für ein einzelnes Objekt, sondern für ein Paar von Objekten zu speichern und auszulesen. Es ist aber auch möglich dies auf ein einzelnes Objekt zu speichern. Letzteres ist vor allem möglich, wenn diese Eigenschaft bereits für ein Objekt, beispielsweise durch (aufwändigere) Messung, bestimmt worden ist.

Die Eigenschaft nicht-Linearität der Phase bei Frequenzänderung, insbesondere ein Maß der nicht-Linearität kann zum Beispiel ein binärer Parameter sein und/oder Korrekturinformationen zur Korrektur der Abweichung von Linearität beinhalten.

Als besonders vorteilhaft hat sich gezeigt, wenn die Eigenschaft Phasenvorhersagbarkeit bei Frequenzwechsel genutzt wird, auch die Eigenschaft Maß der Übertragungsrichtungsasymmetrie zu nutzen, weil dann besonders zuverlässige und energiesparend Einwegkanalantworten zur Bestimmung verwendet werden können.

Durch die Verwendung der gespeicherten vorbestimmten Eigenschaften kann nicht nur effizienter gearbeitet werden, sondern können auch Parameter für Sicherheitsprüfungen enger gesteckt werden, da durch die gespeicherten vorbestimmten Eigenschaften Unterschiede zwischen unterschiedlichen Objekten nivelliert werden können, was Abweichungen reduziert und so Grenzen bei Prüfungen enger gesteckt werden können, was die Sicherheit weiter erhöht.

Sofern bei einer Bestimmung noch nicht ausreichend gespeicherte vorbestimmte Eigenschaften vorliegen, um die Sicherheitsprüfungen zu verschärfen, kann vorteilhafterweise mit weiteren Sicherheitsanforderungen (beispielsweise Passworten, Zertifikaten, größere Bandbreite, mehr Funksignale) gearbeitet werden, auf die, zumindest teilweise, verzichtet werden kann, wenn mindestens eine oder ausreichend gespeicherte vorbestimmten Eigenschaften verfügbar sind, um die Sicherheitsprüfungen zu verschärfen.

Somit wird das Verfahren insbesondere so geführt, dass bei Vorliegen einer vorbestimmten Menge an gespeicherten vorbestimmten Eigenschaften und/oder vorbestimmter Genauigkeit und/oder Unterschreiten eines vorbestimmten Maximalalters gespeicherter vorbestimmter Eigenschaften für eine Bestimmung, insbesondere zwischen zwei Objekten, und/oder für die Zugangsgewährung und/oder Freigabe weitere Sicherheitsanforderungen, wie Passworteingaben, insbesondere für einen Zugang und/oder eine Freigabe, die zumindest unter anderem auf Basis der Bestimmung erfolgt und/oder verweigert wird, niedriger gesetzt werden, insbesondere im Vergleich zur ersten Bestimmung zwischen den zwei Objekten und/oder für die Speicherung von vorbestimmten Eigenschaften und/oder bei nicht-Vorliegen.

Insbesondere bei einem Zugangs-/Freigabegewährungssystem, das eins der zwei Objekte, insbesondere das zweite, beinhaltet, wie Automobil, kann sich die vorbestimmte Menge/Genauigkeit/Maximalalter auch allein auf das andere, insbesondere erste beziehen.

Auch werden die vorbestimmten Eigenschaften bei einem Zugangs-/Freigabegewährungssystem, das eins der zwei Objekte, insbesondere das zweite, beinhaltet, vorteilhafterweise im Zugangs-/Freigabegewährungssystem und/oder (nur) für das Zugangs-/Freigabegewährungssystem zugänglich und/oder nicht für das erste Objekt zugänglich gespeichert.

Unter dem Austausch von Funksignalen zwischen zwei Objekten wird insbesondere das Übertragen mindestens eines Funksignals in die eine Richtung zwischen den zwei Objekten und, insbesondere als Reaktion darauf, unmittelbar oder später, die Übertragung mindestens eines Funksignals in die umgekehrte Richtung zwischen den zwei Objekten verstanden. Dabei werden für den Hin- und Rückweg insbesondere dieselbe(n) Frequenz(en) verwendet. Insbesondere wird dies mehrfach wiederholt.

Die Messungen können zum Beispiel Laufzeitmessungen (insbesondere TBR), Phasenmessungen (insbesondere PBR) und/oder Amplitudenmessungen sein, insbesondere Laufzeitmessungen (insbesondere TBR) sowie Amplitudenmessungen und/oder Phasenmessungen (insbesondere PBR) sowie Amplitudenmessungen. Messwerte werden dabei an den Funksignalen zumindest jeweils am Objekt durchgeführt, das die Funksignale des anderen empfängt. Zusätzlich können auch Messungen am eigenen ausgestrahlten oder zur Bildung des Funksignal zur Ausstrahlung vorgesehenen Signal genommen werden.

Die Übertragung der Funksignale kann bevorzugt über mehrere unterschiedliche Antennenpfade, insbesondere pro Richtung erfolgen.

Die gespeicherten vorbestimmten Eigenschaften können auf ein Objekt oder eine Menge von Objekten, insbesondere ein Paar bezogen sein. Dementsprechend kann die Prüfung, ob vorbestimmte Eigenschaften bekannt sind zum Beispiel für eines der Objekte, für beide Objekte und/oder das Paar erfolgen.

Mit Vorteil wird, insbesondere abhängig von der Bestimmung der Kanalgüte und/oder vorbestimmter Sicherheitsmerkmale, mindestens eine der vorbestimmten Eigenschaften mindestens eines der zwei Objekte, insbesondere eines oder jeweils mindestens eine vorbestimmte Eigenschaft beider Objekte und/oder eine vorbestimmte Eigenschaft des Paars der zwei Objekte, für ein späteres Auslesen gespeichert, insbesondere sofern und/oder nur sofern eine erfolgreiche Autorisierung erfolgt ist und/oder bei Feststellen einer Link Qualität, die eine vorbestimmte Mindestlinkqualität erfüllt, Feststellen einer Entfernung (insbesondere zwischen den zwei Objekten), die eine vorbestimmte Maximalentfernung nicht überschreitet, Feststellen einer Signalstärke empfangener Funksignale zwischen den zwei Objekten, die eine vorbestimmte Mindestsignalstärke erreicht, Feststellen einer Messwertkonsistenz, die eine vorbestimmte Mindestkonsistenz erreicht und/oder Feststellen einer Entfernung, insbesondere relativen Position mindestens eines der zwei Objekte, insbesondere zum anderen Objekt, die eine vorbestimmte Anforderung an Entfernung und/oder relative Position, beispielsweise unmittelbar vor einer Zugangsbeschränkungsvorrichtung, wie Tür oder Schranke und/oder in einem vorbestimmten (relativ definierten) Volumens, wie innerhalb eines Automobils, erfüllt.

Die Konsistent der Messwerte kann zum Beispiel daran bestimmt werden, ob die kürzeste gemessene Entfernung auch die stärksten Signalanteile aufweist und/oder ob das Entfernungsspektrum der Signalanteile ausreichend schmal ist, insbesondere eine vorbestimmte Maximalbreite nicht überschreitet.

Sicherheitsmerkmale können aus Messungen an den Funksignalen folgen, sie können aber zusätzlich oder alternativ auch Autorisierungen, beispielsweise mittels Zertifikaten oder Verschlüsselungsverfahren beinhalten und somit auch Ergebnisse entsprechender Prüfungen sein.

Es ist möglich, dass eine Speicherung unabhängig, insbesondere vor, der Bestimmung erfolgt, so beispielswiese im Rahmen der Herstellung, Auslieferung und/oder Inbetriebnahme.

Die Speicherung kann beispielsweise in einem der Objekte, insbesondere dem jeweils anderen und/oder beiden Objekten gespeichert werden. Aber auch eine entfernte Speicherung ist alternativ und/oder zusätzlich möglich. Insbesondere kann so auch anderen Objekten unabhängig vom Objekt, dessen gespeicherte vorbestimmte Eigenschaften ausgelesen werden, der Zugriff auf die gespeicherten vorbestimmten Eigenschaften ermöglicht werden, was zusätzliche Sicherheitsmechanismen unabhängig vom jeweils betroffenen Objekt, ermöglicht. Es ist aber auch möglich, dass das Objekt, dessen bestimmte vorbestimmten Eigenschaften gespeichert werden diese speichert und diese anderen Objekten, insbesondere während oder vor der Bestimmung, insbesondere via Funkverbindung, zur Verfügung stellt.

Mit Vorteil werden gespeicherte Eigenschaften nach der Nutzung für eine Bestimmung angepasst, wobei dafür insbesondere maximale Änderungen und/oder Abweichungen vorbestimmt sind und/oder wobei die Anpassung insbesondere nur bei Erfolg der Bestimmung und/oder Erfüllung vorbestimmter Sicherheitsmerkmale und/oder in abhängig von der Bestimmung, der Kanalgüte und/oder vorbestimmter Sicherheitsmerkmale, insbesondere sofern eine erfolgreiche Autorisierung erfolgt ist und/oder bei Feststellen einer Link Qualität, die eine vorbestimmte Mindestlinkqualität erfüllt, bei Feststellen einer Entfernung, insbesondere zwischen den zwei Objekten, die eine vorbestimmte Maximalentfernung nicht überschreitet, bei Feststellen einer Signalstärke empfangener Funksignale zwischen den zwei Objekten, die eine vorbestimmte Mindestsignalstärke erreicht, bei Feststellen einer Messwertkonsistenz, die eine vorbestimmte Mindestkonsistenz erreicht und/oder bei Feststellen einer Entfernung, insbesondere relativen Position mindestens eines der zwei Objekte, insbesondere zum anderen, die eine vorbestimmte Anforderung an Entfernung und/oder relative Position erfüllt.

Die Anpassung einer gespeicherten und/oder genutzten vorbestimmte Eigenschaft nach einer neuerlichen Bestimmung der vorbestimmten Eigenschaft beispielweise so erfolgen, dass die gespeicherte und/oder genutzte vorbestimmte Eigenschaft der neuen Bestimmung der vorbestimmten Eigenschaft durch die neu bestimmte ersetzt wird oder so, dass eine (gewichtete) Mittelung zwischen alter und neuer bestimmt und diese als vorbestimmten Eigenschaft gespeichert und/oder darauf folgend genutzt wird. Dabei können dann vorbestimmte Grenzen der Änderung der gespeicherten vorbestimmten Eigenschaft vorgesehen werden, die das Maß der Änderung der gespeicherten vorbestimmten Eigenschaft, beispielsweise bei jeder einzelnen Änderung und/oder abhängig von der verstrichenen Zeit und/oder einem Maß der zuvor vorgenommenen Änderungen, begrenzen.

Dadurch lassen sich beispielsweise schleichende Änderungen der Hardware ausgleichen ohne zufälligen Einflüssen zu große Auswirkung auf die gespeicherten vorbestimmten Eigenschaften zu geben.

Mit Vorteil werden, insbesondere alle, gespeicherte(n) vorbestimmten Eigenschaften gelöscht und/oder nicht verwendet, sofern seit der letzten, insbesondere erfolgreichen, Nutzung zur Bestimmung und/oder erfolgreichen Autorisierung zwischen den zwei Objekten und/oder Speicherung, eine vorbestimmte Zeit verstrichen ist und/oder mindestens eine für mindestens eine der vorbestimmte Eigenschaften relevante vorbestimmte Änderung an mindestens einem der Objekte seit der letzten Bestimmung eingetreten sind, insbesondere ein Softwareupdate erfolgt ist.

Dadurch lassen sich abrupte Änderungen wie beispielsweise der Software und damit der Art der Ansteuerung der Hardware auffangen und somit die Robustheit des Verfahrens steigern.

Mit Vorteil wird die Bestimmung zwischen den zwei Objekten wiederholt durchgeführt, insbesondere mit zwischenzeitlicher Funkverbindung mindestens eines der zwei Objekte mit einem anderen Objekt über dieselbe Funkschnittstelle, die zur Übertragung der Funksignale zur Bestimmung verwendet wird.

Durch die wiederholte Durchführung lassen sich die die Vorteile des Verfahrens besonders gut nutzen, ebenso spielt es seine Stärke gerade dann aus, wenn die Bestimmung zwischen unterschiedlichen Paaren, beispielsweise in willkürlicher Abfolge, erfolgt. Dies ist zum Beispiel bei der Nutzung mehrerer "Schlüssel" (Keyfobs, Handys, Smartwatchs, ...) für einen Zugang, zum Beispiel zu einem Automobil, der Fall.

Bevorzugt werden die Funksignale über Bluetooth ausgetauscht, sind sie insbesondere Channel sounding Signale und/oder weisen jeweils und/oder paarweise konstante Frequenz auf und/oder sind sie nicht modulierte Funksignale. Diese Art der Signale hat sich als besonders gut geeignet für die Durchführung des Verfahrens gezeigt. Zudem sind viele Geräte in der Lage, derartige Signale auszustrahlen und zu messen.

Mit Vorteil weisen die Objekte jeweils eine eindeutige ID auf, die zur Erkennung der Objekte und/oder Zuordnung der gespeicherten vorbestimmten Eigenschaften zu einem Objekt genutzt wird. Eine solche ID kann beispielsweise durch die verwendete Funkschnittstelle definiert sein oder auch durch eine Software zur Durchführung des Verfahrens, jedem Objekt, dass an der Durchführung des Verfahrens beteiligt ist, vergeben werden. Sie kann beispielsweise zur Abfrage, Kennzeichnung und/oder zur Zuordnung gespeicherter vorbestimmter Eigenschaften dienen.

In einer dezentralen Ausgestaltung des Verfahrens können die zu speichernden vorbestimmten Eigenschaften des ersten Objekts zumindest auch oder nur auf dem zweiten Objekt oder für das zweite Objekt unabhängig vom ersten Objekt zugreifbar gespeichert werden und/oder werden die gespeicherten vorbestimmten Eigenschaften vor der Bestimmung mittels Funksignalen zwischen den Objekten übertragen. Insbesondere gilt dies umgekehrt (in Bezug auf erstes/zweites Objekt) ebenfalls.

In einer zentralen Ausgestaltung können die Objekte die bestimmten vorbestimmten Eigenschaften zentral speichern und abfragen, insbesondere auf einer Serverarchitektur, insbesondere einem oder mehreren verbundenen Server(n).

Auch kann es vorteilhaft sein, die bestimmten vorbestimmten Eigenschaften, insbesondere asymmetrisch, verschlüsselt zu speichern und/oder zu übertragen.

In einer zentralen Ausgestaltung können die zu speichernden Eigenschaften des ersten Objekts für das zweite Objekt unabhängig vom ersten Objekt zugreifbar gespeichert werden. Es sind aber auch Ausgestaltungen denkbar, bei dem ein Mitwirken des ersten Geräts, beispielsweise zur Authentifizierung und/oder Entschlüsselung, erforderlich ist, um auf zentral gespeicherte Eigenschaften des ersten Geräts zugreifen zu können. Insbesondere gilt dies umgekehrt (in Bezug auf erstes/zweites Objekt) ebenfalls.

Mit Vorteil kann eine (weitere) Funkschnittstelle genutzt werden, um die bestimmten vorbestimmten Eigenschaften zur Speicherung zu übertragen und/oder abzufragen, insbesondere via Internet und/oder, insbesondere mobiler, Datenverbindung.

Besonders bevorzugt nutzt mindestens eines der zwei Objekte, insbesondere beide, eine Mehrzahl von Sende- und/oder Empfangsvorrichtungen zum Senden bzw. Empfangen der Funksignale zur Bestimmung. Dadurch lässt sich die Genauigkeit und Robustheit steigern. In der Regel reichen dazu zwei Sende- und/oder Empfangsvorrichtungen je Objekt aus. Dabei ist bevorzugt je Objekt mindestens eine Vorrichtung, insbesondere alle, als Sende- und Empfangsvorrichtung genutzt, sodass bevorzugt im ersten und/oder zweiten Objekt zwei Vorrichtungen, insbesondere Antennen, zum Senden und Empfangen für der Funksignale für die Bestimmung genutzt werden.

Mit besonderem Vorteil beinhaltet das Verfahren das Gewähren eines Zugangs und/oder einer Freigabe, die Durchführung einer angefragten Handlung oder Aktion und/oder das Unterlassen einer Alarmierung oder Sperrung, sofern zumindest (es können weitere Voraussetzung gegeben sein, wie die erfolgreiche Authentifizierung) das Ergebnis der Bestimmung mindestens eine vorbestimmte Anforderung erfüllt.

Mit besonderem Vorteil beinhaltet das Verfahren das Verweigern eines Zugangs und/oder einer Freigabe, das Unterlassen einer angefragten Handlung oder Aktion und/oder das Durchführen einer Alarmierung oder Sperrung, sofern zumindest das Ergebnis der Bestimmung mindestens eine vorbestimmte Anforderung nicht erfüllt und/oder die mindestens eine sich in den Funksignalen, insbesondere des ersten Objekts, niederschlagende vorbestimmte Eigenschaft des ersten Objekts eine vorbestimmt Abweichung von mindestens einer gespeicherten vorbestimmten Eigenschaft des ersten Objekt aufweist.

Die vorbestimmte Anforderung kann zum Beispiel das Feststellen einer Link Qualität, die eine vorbestimmte Mindestlinkqualität erfüllt, das Feststellen einer Entfernung (insbesondere zwischen den zwei Objekten), die eine vorbestimmte Maximalentfernung nicht überschreitet, das Feststellen einer Signalstärke empfangener Funksignale zwischen den zwei Objekten, die eine vorbestimmte Mindestsignalstärke erreicht, das Feststellen einer Messwertkonsistenz, die eine vorbestimmte Mindestkonsistenz erreicht und/oder das Feststellen einer Entfernung, insbesondere relativen Position mindestens eines der zwei Objekte, die eine vorbestimmte Anforderung an Entfernung und/oder relative Position, beispielsweise unmittelbar vor einer Zugangsbeschränkungsvorrichtung, wie Tür oder Schranke und/oder in einem vorbestimmen (relativ definierten) Volumens, wie innerhalb eines Automobils, erfüllt beinhalten oder sein.

Das Verfahren eignet sich besonders gut zur effizienten Absicherung, beispielsweise eines Zugangs/einer Freigabe, da es erlaubt, besonders hohe Anforderungen an die Funksignale zu stellen, wenn gespeicherte vorbestimmte Eigenschaften zur Bestimmung genutzt werden.

Mit Vorteil werden die gespeicherten vorbestimmten Eigenschaften des ersten und/oder zweiten Objekts, zumindest teilweise, bei der Bestimmung, insbesondere bis nach der nächsten erfolgreichen Bestimmung zwischen den Objekten, missachtet und/oder gelöscht, falls die Bestimmung zwischen den Objekten eine vorbestimmte Anzahl von Versuchen überschreitend scheitert.

Dadurch lässt sich die Robustheit des Verfahrens, beispielsweise gegenüber abrupten Änderungen, steigern.

Mit Vorteil werden gespeicherte vorbestimmte Eigenschaften genutzt, um die Anforderungen an die Funksignale zu erhöhen. Dabei sind Anforderungen insbesondere oben exemplarisch gelistete und/oder solche die zur Entscheidung über eine Authentifizierung, einen Zugang oder einer Freigabe genutzt werden.

Mit Vorteil werden gespeicherte vorbestimmte Eigenschaften genutzt, um die Bestimmung und/oder die ihr zugrunde liegenden Messungen mittels der Funksignale zu beschleunigen, energieeffizienter und/oder robuster gegen Umgebungseinflüsse auszugestalten, insbesondere sofern eins der Objekte präzisere Hardware aufweist als schlechtesten falls anzunehmen, insbesondere durch Auslassen von Frequenzen, Antennenpfaden und/oder Berechnungen.

Bevorzugt wird das Verfahren mit einer nachfolgend geschilderten Vorrichtung oder Menge an Vorrichtungen durchgeführt und/oder sind nachfolgend erläuterte Vorrichtungen eingerichtet zur Durchführung eines vorstehend erläuterten Verfahrens. Dazu weisen die Vorrichtung insbesondere mindestens eine Steuerungseinheit auf, die eingerichtet, die Durchführung des Verfahrens zu steuern.

Mit besonderem Vorteil wird das Verfahren unter Verwendung mindestens eines mithörenden, insbesondere passiven, dritten Objekt durchgeführt, das die Funksignale zwischen dem ersten und dem zweiten Objekt empfängt und Messungen an den empfangenen Funksignalen durchführt, wobei die Messungen bei der Bestimmung unter Berücksichtigung mindestens einer gespeicherten vorbestimmten Eigenschaft des ersten, zweiten und/oder dritten Objekts berücksichtigt werden.

Grundsätzlich ist es umfangreich bekannt, ein mithörendes Objekt einzusetzen. Dies kann beispielsweise - insbesondere mit dem ersten oder zweiten Objekt - Teil eines Ankernetzes und/und oder eines Zugangsbeschränkungssystems sein. Auch kann das mithörende Objekt zum Beispiel zur Bestimmung von vorbestimmten Eigenschaften senden, was bevorzugt ist. Es zeichnet sich aber insbesondere dadurch aus, nicht ausreichend Funksignale für eine Bestimmung der Entfernung und/oder eines Winkels zu senden und/oder während der Messungen zur Bestimmung nicht zu senden. Dabei können die Messwerte des dritten Objekts beispielsweise zur Verbesserung, insbesondere hinsichtlich der Genauigkeit, Zuverlässigkeit oder Geschwindigkeit verwendet werden und/oder zu einer (zusätzlichen) Absicherung gegen Angriffe, beispielsweise Relay- oder Early-detect-late-commit-Attack genutzt werden, insbesondere wenn des dritte Objekt eine feste und oder/bekannte räumliche Anordnung zum ersten oder zweiten Objekt aufweist, was bevorzugt ist.

Von besonderer Bedeutung ist für das mithörende Objekt vorteilhafterweise das Maß der Übertragungsrichtungsasymmetrie zu zumindest einem der zwei (erstes und zweites) Objekte durch eigenes Senden zu bestimmen. Dies erhöht die Robustheit des Verfahrens deutlich im Gegensatz zu einem rein passiven dritten Objekt.

In Bezug auf die Messungen des dritten Objekts wird insbesondere
bei Bekanntheit des Maßes der Abweichung zwischen PBR und TBR eine, insbesondere frequenzabhängige, Korrektur der Abweichung zwischen PBR- und TBR-Messung durchgeführt und/oder
   bei Bekanntheit mindestens einer problematischen Frequenz die Messwerte auf der mindestens einen problematischen Frequenz bei der Bestimmung niedriger gewichtet oder nicht berücksichtigt und/oder
   bei Bekanntheit der Phasenvorhersagbarkeit bei Frequenzwechsel keine 180°-Phasenambiguitätsentscheidung durchgeführt und/oder
bei Bekanntheit der Konstantheit der Phase und/oder Amplitude zwischen Wiederholungen Messungen auf den zu Beginn einer Wiederholung wiederholten Frequenzen zur Bestimmung neben den Messungen auf zu wiederholenden Frequenzen, insbesondere unmittelbar, vorausgehenden Funksignals und/oder Funksignalaustausches, die wiederholt werden, verwendet oder eine Auswahlentscheidung zwischen den Messungen auf zu wiederholenden Frequenzen und Messungen auf wiederholten Frequenzen durchgeführt und/oder
   bei Bekanntheit des Maßes der Übertragungsrichtungsasymmetrie eine Korrektur der Messwerte zur Reduzierung der Übertragungsrichtungsasymmetrie in den Messwerten vorgenommen und/oder
   bei Bekanntheit der nicht-Linearität der Phase bei Frequenzänderung die Spanne der zur Bestimmung verwendeten Frequenzspanne angepasst wird, insbesondere bei höherer nicht-Linearität verringert wird und/oder, insbesondere bei Bekanntheit eines Maßes der nicht-Linearität der Phase bei Frequenzänderung, eine Korrektur der Messwerte vorgenommen wird.

Grundsätzlich wird es besonders bevorzugt, wenn durch die Verwendung mindestens einer gespeicherten vorbestimmten Eigenschaft bereits das Aussenden der Funksignale verändert, insbesondere optimiert wird, beispielsweise energetisch optimiert. Dies kann bei mindestens einer bekannten problematischen Frequenz beispielsweise dadurch erfolgen, dass auf der mindestens einen problematischen Frequenz gar kein Funksignal zur Bestimmung gesendet wird oder nicht nur die Spanne der Frequenz der zur Bestimmung verwendeten Funksignale reduziert, sondern bereits die Spanne der zur Bestimmung gesendeten Funksignale reduziert wird, allgemein beispielsweise die Menge der Funksignale reduziert wird.

Gelöst wird die Aufgabe auch durch einen Transceiver, insbesondere erstes oder zweites Objekt, insbesondere Keyfob, Mobiltelefon und/oder Teil eines Zugangsbeschränkungssystems, insbesondere eines Fahrzeuges, aufweisend eine Funkschnittstelle und eine Recheneinheit sowie eine Speichereinheit und insbesondere eine Kommunikationsschnittstelle, insbesondere aufweisend eine weitere Funkschnittstelle, eingerichtet zur Durchführung des Verfahrens, insbesondere mit einem identischen Transceiver, insbesondere als anders, insbesondere als zweites bzw. erstes Objekt.

Gelöst wird die Aufgabe auch durch ein System, insbesondere Zugangsbeschränkungssystem, insbesondere als zweites Objekt, insbesondere eines Fahrzeuges, aufweisend mindestens einen Transceiver und/oder eine Mehrzahl von Sende- und/oder Empfangsvorrichtungen eingerichtet zur Durchführung des Verfahrens, insbesondere mit einem erfindungsgemäßen Transceiver, insbesondere als erstes Objekt.

Gelöst wird die Aufgabe auch durch eine Gruppe von mindestens zusammen drei, insbesondere mindestens vier, erfindungsgemäßen Transceiver(n) und/oder System(en) eingerichtet zur paarweisen Durchführung des Verfahrens, insbesondere als erstes und zweites Objekt.

Insbesondere bezieht sich, wenn nichts Gegenteiliges ausgeführt ist, Bestimmung auf die Bestimmung der Entfernung und7oder des Winkels.

Die nachfolgende, rein exemplarische Beschreibung der rein exemplarischen und schematischen Figuren trägt zum besseren Verständnis der Erfindung bei. Hierbei zeigt:
- Fig. 1: eine Veranschaulichung der Erfindung im Rahmen eines PKW-Schließsystems und
- Fig. 2: eine Veranschaulichung eines möglichen Verfahrensablaufs und
- Fig. 3: eine Veranschaulichung von Zuverlässigkeistsvorteilen anhand eines möglichen Verfahrensablaufs und
- Fig. 4: eine Veranschaulichung von Sicherheitsvorteilen anhand eines möglichen Verfahrensablaufs und
- Fig. 5: eine Veranschaulichung von Geschwindigkeitsvorteilen anhand eines möglichen Verfahrensablaufs und
- Fig. 6: einen Vergleich der Öffnungsgeschwindigkeit eines Kfzs mit einem erfindungsgemäßen Verfahren (AQUAA) und einem herkömmlichen (no AQUAA) und
- Fig. 7: einen Vergleich der Zuverlässigkeit bei der Öffnung eines Kfzs mit dem erfindungsgemäßen Verfahren (AQUAA) und herkömmlichen Verfahren (no AQUAA) sowie
- Fig. 8: einen Vergleich bei einem Angriff zur Öffnung eines Kfzs mit einem erfindungsgemäßen Verfahren (AQUAA) und herkömmlichen Verfahren (no AQUAA).

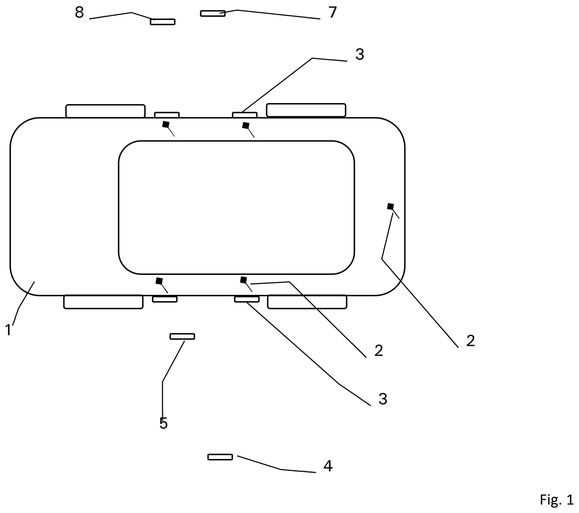

Fig. 1 zeigt eine Ansicht eines PKWs 1 von oben, neben den Tür- und Kofferraumgriffen 3 sind zweite Objekte 2 angeordnet. Zu erkennen sind zudem zur Öffnung autorisierte Fobs, Smartphones u.a. (Transponder/Transceiver) 4, 5, 7, 8.

Die Fobs, Smartphones u.a. (Transponder/Transceiver) 4, 5, 7, 8 sind jeweils ein erstes Objekt. Die Ersten und zweiten Objekte bilden eine Gruppe von Objekten. Die zweiten Objekte bilden ein Ankernetz und sind Teil eines Zugangs- und Freigabesystems des PKWs. Sie sind miteinander datentechnisch verbunden und kommunizieren mit einem zentralen Server im PKW, auf dem vorbestimmte Eigenschaften von ersten Objekten gespeichert und von dem solche abgefragt werden.

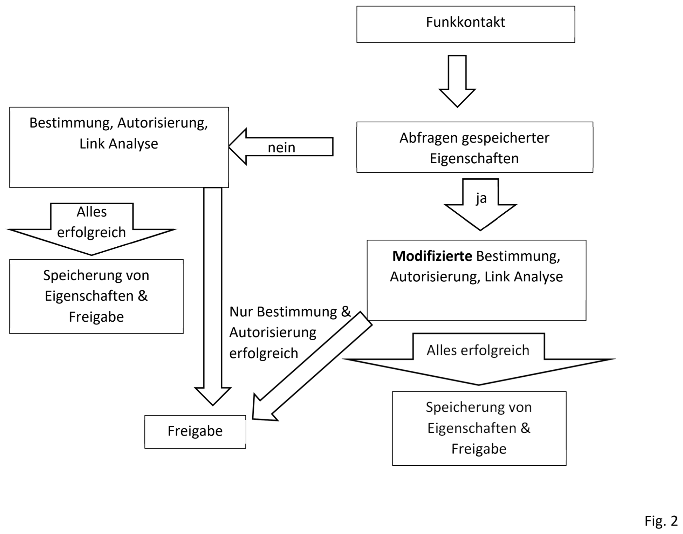

Fig. 2 zeigt einen möglichen Verfahrensablauf. Nach Aufnahme des Funkkontakts zwischen einem ersten und einem zweiten Objekt und Austausch von IDs werden gespeicherte Eigenschaften der zwei Objekte abgefragt. Sind solche vorhanden und gültig wird die Bestimmung entsprechend modifiziert (robuster, genauer, energiesparend und/oder zusätzlich durch engere Grenzen gesichert) neben einer Autorisierung, beispielsweise mittels Zertifikaten, und einer Analyse der Qualität der Funkverbindung (Link Analyse), beispielsweise anhand im Rahmen der Bestimmung übermittelter Funksignale oder von Messungen von vorbestimmten Eigenschaften im Rahmen der Bestimmung durchgeführt. Er füllt alles entsprechende vorbestimmte Anforderungen wird eine Freigabe, beispielsweise der Zündung eines PKWs, und die Speicherung im Rahmen der Bestimmung (neu) ermittelter vorbestimmter Eigenschaften durchgeführt.

Sind keine gültigen, gespeicherten vorbestimmte Eigenschaften verfügbar, wird eine unmodifizierte Bestimmung, Autorisierung und Link Analyse durchgeführt. Er füllt alles entsprechende vorbestimmte Anforderungen wird eine Freigabe, beispielsweise der Zündung eines PKWs, und die Speicherung im Rahmen der Bestimmung (neu) ermittelter vorbestimmter Eigenschaften durchgeführt.

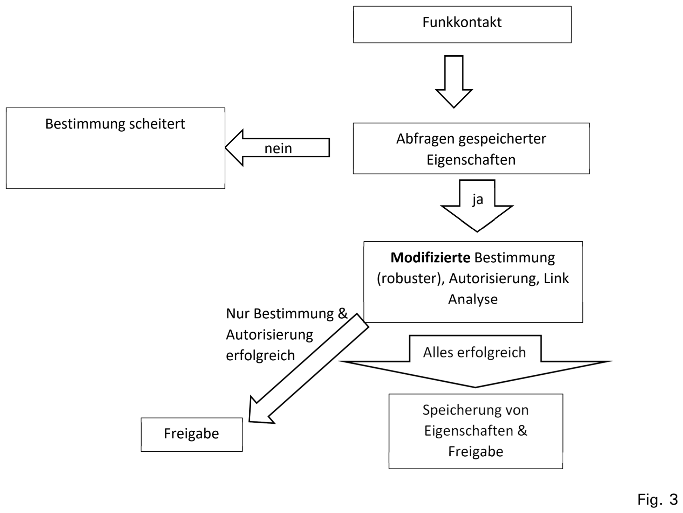

Fig. 3 zeigt verschiedene Szenarien bei gleichen Funksignalen. Nach Aufnahme des Funkkontakts zwischen einem ersten und einem zweiten Objekt und Austausch von IDs werden gespeicherte Eigenschaften der zwei Objekte abgefragt. Sind solche vorhanden wird die Bestimmung entsprechend modifiziert (robuster durch Ausschluss von problematischen Frequenzen und höherer Genauigkeit durch Anpassung der Messungen auf Basis gespeicherter Eigenschaften, ...) neben einer Autorisierung, beispielsweise mittels Zertifikaten, und einer Analyse der Qualität der Funkverbindung (Link Analyse) durchgeführt (rechter Ast in der Grafik). Durch die Nutzung der gespeicherten Eigenschaften kann auch bei schlechter Link Qualität (beispielsweise auf Grund von Störungen) die Bestimmung erfolgreich durchgeführt werden, je nach Stärke der Störung mit ausreichender Link Qualität für die neue Speicherung vorbestimmter Eigenschaften oder nur ausreichend für die Freigabe.

Bei gleichen Funksignalen und Umgebung, also gleicher Linkqualität, könnte die Bestimmung ohne gespeicherte vorbestimmte Eigenschaften nicht erfolgreich durchgeführt werden (linker Ast in der Figur).

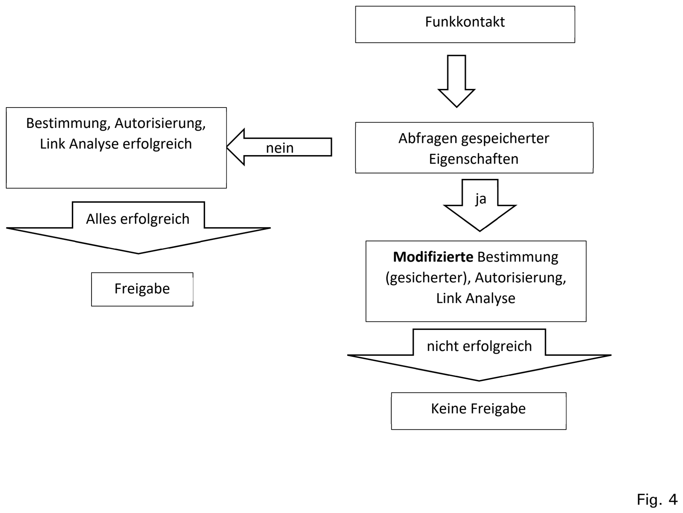

Fig. 4 zeigt verschiedene Szenarien bei gleichen Funksignalen. Nach Aufnahme des Funkkontakts zwischen einem ersten und einem zweiten Objekt und Austausch von IDs werden gespeicherte Eigenschaften der zwei Objekte abgefragt. Sind solche vorhanden wird die Bestimmung entsprechend modifiziert (besser gesichert durch engere Grenzen) neben einer Autorisierung, beispielsweise mittels Zertifikaten, und einer Analyse der Qualität der Funkverbindung (Link Analyse) durchgeführt (rechter Ast in der Grafik). Durch die Nutzung der gespeicherten Eigenschaften kann bei einem Angriff, beispielsweise Early-detect-late-commit, durch ein drittes Objekt sicherer/besser erkannt werden, dass ein nicht autorisierter Eingriff erfolgt ist und die Freigabe abgelehnt werden.

Bei gleichen Funksignalen und Umgebung, also gleicher Angriff, wäre ohne die Setzung engerer Grenzen mittels der gespeicherten vorbestimmten Eigenschaften (linker Ast in der Figur) eine Freigabe erfolgt.

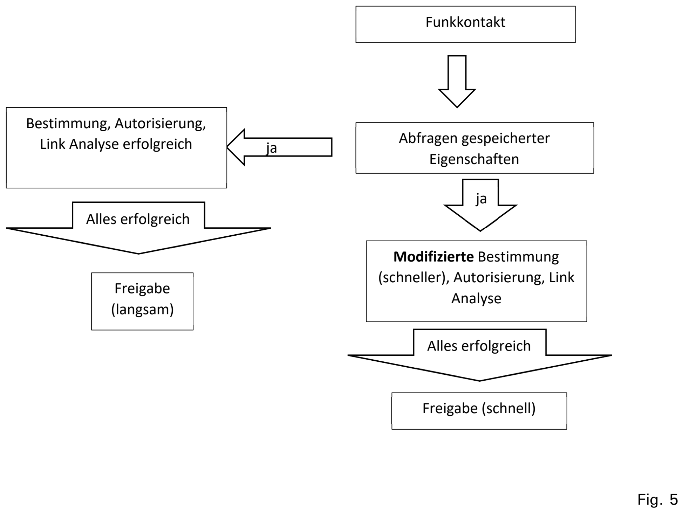

Fig. 5 zeigt verschiedene Szenarien bei gleichen Funksignalen. Nach Aufnahme des Funkkontakts zwischen einem ersten und einem zweiten Objekt und Austausch von IDs werden gespeicherte Eigenschaften der zwei Objekte abgefragt. Sind solche vorhanden wird die Bestimmung entsprechend modifiziert (Nutzung wenigerer Frequenzen) neben einer Autorisierung, beispielsweise mittels Zertifikaten, und einer Analyse der Qualität der Funkverbindung (Link Analyse) durchgeführt (rechter Ast in der Grafik). Durch die Nutzung der gespeicherten Eigenschaften kann eine Freigabe schneller und energiesparender erfolgen.

Ohne Nutzung der gespeicherten vorbestimmten Eigenschaften (linker Ast in der Figur) wird zwar ebenfalls eine Freigabe durchgeführt, dies jedoch erst späte rund unter höherem Energieverbrauch.

Dies Beispiele der Fig. 3 bis 5 zeigen Aspekte jeweils weitgehend isoliert. Sie können aber alle gemeinsam genutzt werden.

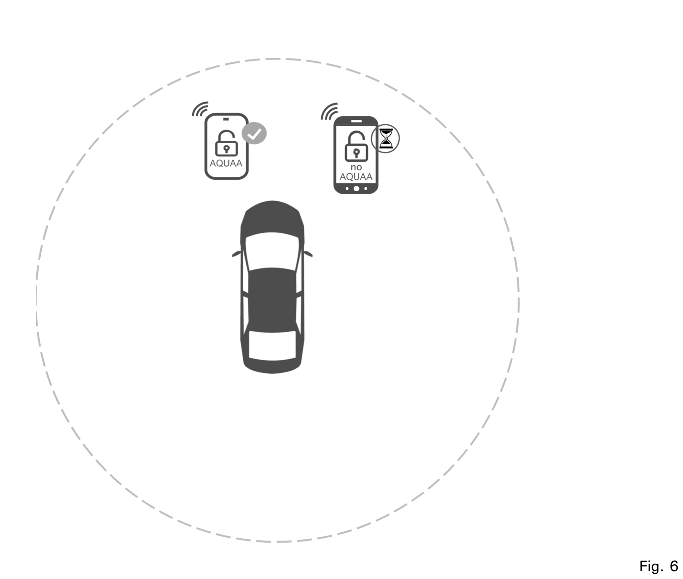

Fig. 6 veranschaulicht die Öffnung eines Kfzs mittels Mobiltelefon. Durch den gestrichelten Kreis ist ein Bereich gekennzeichnet, innerhalb dessen eine Öffnung ermöglicht werden soll. Das Mobiltelefon (links, AQUAA), dass das erfindungsgemäße Verfahren ausführt und bzgl. dessen das Kfz bereits vorbestimmte Eigenschaften gespeichert hat, kann das Kfz sehr schnell öffnen, während herkömmliche Verfahren (no AQUAA) dazu deutlich länger benötigen. Beide öffnen in diesem Szenario aber korrekt das Kfz.

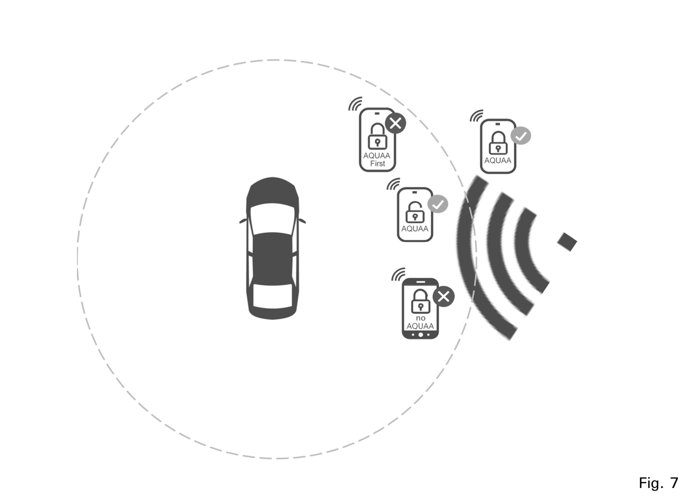

Fig. 7 zeigt eine Veranschaulichung des Kfzs und des Öffnungskreises wie in Fig. 6. Es liegt jedoch eine externe interferierende Funkstörung vor, sodass die Funkkommunikation gestört ist.

Mobiltelefon ohne zuvor gespeicherte vorbestimmte Eigenschaften scheitern, während mit erfindungsgemäßen Mobiltelefonen innerhalb des Öffnungskreises ein Öffnung möglich ist (symbolisiert durch das geöffnete Schloss). Die korrekte Funktionsweise ist durch einen grünen Kreis mit Haken im Gegensetz zu einem roten Kreis mit einem Kreuz angedeutet.

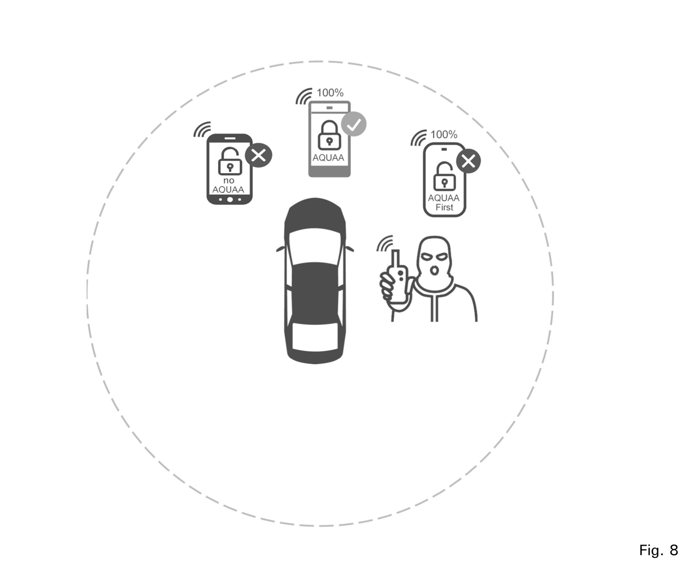

Fig. 8 veranschaulicht ein Szenario mit einem Angriff auf die Funkkommunikation. Durch im Kfz gespeicherte vorbestimmte Eigenschaften des mittleren erfindungsgemäßen Mobiltelefons kann der Angriff erkannt und das Öffnen verweigert werden und so das gewünschte Verhalten erreicht werden. Bzgl. nicht erfindungsgemäßen und solchen zu denen noch keine vorbestimmten Eigenschaften gespeichert wurden, scheitert die Prüfung insofern, als der Angreifer ein Öffnen erreichen kann. Derartiges lässt sich zwar durch genauere Prüfungen und ausreichender Hardware zwar meist dennoch verhindern, dann aber zu Last der notwendigen Zeit und Energie. Dies ist bei erstmaliger Kommunikation des erfindungsgemäß arbeiteten Mobiltelefons mit dem Auto problemlos hinnehmbar, dauerhaft jedoch meist nicht.

### Bezugszeichenliste

- 1: Auto
- 2: zweite Objekte
- 3: Türgriff
- 4: Erster Fob
- 5: Zweiter Fob
- 6: Dritter Fob
- 7: Vierter Fob

## Patentansprüche

1. Verfahren zur wiederholten Bestimmung des Abstandes und/oder eines Winkels, insbesondere Orientierung, zwischen mindestens zwei Objekten auf Basis von Messwerten an Funksignalen zwischen den mindestens zwei Objekten,
wobei paarweise bezüglich zwei, einem ersten und einem zweiten der mindestens zwei Objekte, zumindest bezüglich eines ersten der zwei Objekte, insbesondere beider Objekte, bestimmt, insbesondere ausgelesen, wird, ob aus vorherigen Bestimmungen, zwischen den zwei Objekten, mindestens eine vorbestimmte Eigenschaft zumindest des ersten Objekts bekannt ist und
die Bestimmung des Abstandes und/oder eines Winkels abhängig vom Ergebnis der Bestimmung, ob mindestens eine vorbestimmte Eigenschaft zumindest des ersten Objekts bekannt ist, durchgeführt wird,
wobei die vorbestimmte Eigenschaft mindestens eine aus den Folgenden ist:
Maß der Abweichung zwischen PBR und TBR,
problematische Frequenz(en),
Phasenvorhersagbarkeit bei Frequenzwechsel,
Konstantheit der Phase und/oder Amplitude zwischen Übertragungswiederholungen, insbesondere Subevents,
Maß der Übertragungsrichtungsasymmetrie,
nicht-Linearität der Phase bei Frequenzänderung, insbesondere ein Maß dessen und wobei
bei Bekanntheit des Maßes der Abweichung zwischen PBR und TBR eine, insbesondere frequenzabhängige, Korrektur der Abweichung zwischen PBR- und TBR-Messung durchgeführt wird und/oder
bei Bekanntheit mindestens einer problematischen Frequenz die Messwerte auf der mindestens einen Frequenz bei der Bestimmung niedriger gewichtet oder nicht berücksichtigt werden und/oder
bei Bekanntheit der Phasenvorhersagbarkeit bei Frequenzwechsel keine 180°-Phasenambiguitätsentscheidung durchgeführt wird und/oder auf mindestens einer Frequenz eine oder zwei Einwegkanalmessungen anstelle einer Rundlaufmessung zur Bestimmung verwendet wird/werden und/oder die Anzahl der Frequenzen und/oder Antennenpfade, auf denen Messungen zur Bestimmung verwendet werden, reduziert wird, und/oder
bei Bekanntheit der Konstantheit der Phase und/oder Amplitude zwischen Wiederholungen Messungen auf den zu Beginn einer Wiederholung wiederholten Frequenzen zur Bestimmung neben den Messungen auf zu wiederholenden Frequenzen, insbesondere unmittelbar, vorausgehenden Funksignals und/oder Funksignalaustausches, die wiederholt werden, verwendet werden oder eine Auswahlentscheidung zwischen den Messungen auf zu wiederholenden Frequenzen und Messungen auf wiederholten Frequenzen erfolgt und/oder
bei Bekanntheit des Maßes der Übertragungsrichtungsasymmetrie eine Korrektur der Messwerte zur Reduzierung der Übertragungsrichtungsasymmetrie in den Messwerten vorgenommen wird und/oder
bei Bekanntheit der nicht-Linearität der Phase bei Frequenzänderung die Spanne der zur Bestimmung verwendeten Frequenzspanne angepasst wird, insbesondere bei höherer nicht-Linearität verringert wird und/oder, insbesondere bei Bekanntheit eines Maßes, eine Korrektur der Messwerte vorgenommen wird.

2. Verfahren nach Anspruch 1, wobei abhängig von der Bestimmung, der Kanalgüte und/oder vorbestimmter Sicherheitsmerkmale mindestens eine der vorbestimmten Eigenschaft mindestens eines der zwei Objekte für ein späteres Auslesen gespeichert wird, insbesondere sofern eine erfolgreiche Autorisierung erfolgt ist und/oder bei Feststellen einer Link Qualität, die eine vorbestimmte Mindestlinkqualität erfüllt, Feststellen einer Entfernung, die eine vorbestimmte Maximalentfernung nicht überschreitet, Feststellen einer Signalstärke empfangener Funksignale zwischen den zwei Objekten, die eine vorbestimmte Mindestsignalstärke erreicht, Feststellen einer Messwertkonsistenz, die eine vorbestimmte Mindestkonsistenz erreicht und/oder Feststellen einer Entfernung, insbesondere relativen Position mindestens eines der zwei Objekte, die eine vorbestimmte Anforderung an Entfernung und/oder relative Position erfüllt.

3. Verfahren nach einem der vorstehenden Anspräche, wobei gespeicherte vorbestimmte Eigenschaften nach der Nutzung für eine Bestimmung angepasst werden, wobei dafür insbesondere maximale Änderungen und/oder Abweichungen vorbestimmt sind, insbesondere in abhängig von der Bestimmung, der Kanalgüte und/oder vorbestimmter Sicherheitsmerkmale, insbesondere sofern eine erfolgreiche Autorisierung erfolgt ist und/oder bei Feststellen einer Link Qualität, die eine vorbestimmte Mindestlinkqualität erfüllt, Feststellen einer Entfernung, die eine vorbestimmte Maximalentfernung nicht überschreitet, Feststellen einer Signalstärke empfangener Funksignale zwischen den zwei Objekten, die eine vorbestimmte Mindestsignalstärke erreicht, Feststellen einer Messwertkonsistenz, die eine vorbestimmte Mindestkonsistenz erreicht und/oder Feststellen einer Entfernung, insbesondere relativen Position mindestens eines der zwei Objekte, die eine vorbestimmte Anforderung an Entfernung und/oder relative Position erfüllt.

4. Verfahren nach einem der vorstehenden Ansprüche, wobei gespeicherte vorbestimmte Eigenschaften gelöscht und/oder nicht verwendet werden, sofern seit der letzten, insbesondere erfolgreichen, Nutzung zur Bestimmung und/oder erfolgreichen Autorisierung zwischen den zwei Objekten, eine vorbestimmte Zeit verstrichen ist und/oder mindestens eine für mindestens eine der vorbestimmte Eigenschaften relevante vorbestimmte Änderung an mindestens einem der Objekte seit der letzten Bestimmung eingetreten sind, insbesondere ein Softwareupdate erfolgt ist.

5. Verfahren nach einem der vorstehenden Ansprüche, wobei die Bestimmung zwischen den zwei Objekten wiederholt durchgeführt wird, insbesondere mit zwischenzeitlicher Funkverbindung mindestens eines der zwei Objekte mit einem anderen Objekt über dieselbe Funkschnittstelle, die zur Übertragung der Funksignale zur Bestimmung verwendet wird.

6. Verfahren nach einem der vorstehenden Ansprüche, wobei die Funksignale über Bluetooth ausgetauscht werden, insbesondere Channel sounding Signale sind und/oder jeweils und/oder paarweise konstante Frequenz aufweisen und/oder nicht modulierte Funksignale sind und/oder, wobei die Objekte jeweils eine eindeutige ID aufweisen, die zur Erkennung der Objekte und/oder Zuordnung der gespeicherten vorbestimmten Eigenschaften zu einem Objekt genutzt wird.

7. Verfahren nach einem der vorstehenden Ansprüche, wobei die zu speichernden vorbestimmten Eigenschaften des ersten Objekts zumindest auch auf dem zweiten Objekt oder für das zweite Objekt unabhängig vom ersten Objekt zugreifbar gespeichert werden und/oder die gespeicherten vorbestimmten Eigenschaften vor der Bestimmung mittels Funksignalen zwischen den Objekten übertragen werden und/oder wobei eine weitere Kommunikationsschnittstelle, insbesondere Funkschnittstelle, genutzt wird, um die vorbestimmten Eigenschaften zur Speicherung zu übertragen und/oder abzufragen, insbesondere via Internet und/oder, insbesondere mobiler, Datenverbindung und/oder wobei die Objekte die bestimmten vorbestimmten Eigenschaften zentral speichern und abfragen, insbesondere auf einer Serverarchitektur und/oder in einem Ankernetz, insbesondere einem oder mehreren verbundenen Servern.

8. Verfahren nach einem der vorstehenden Ansprüche, wobei mindestens eines der zwei Objekte eine Mehrzahl von Sende- und/oder Empfangsvorrichtungen zum senden bzw. Empfangen der Funksignale aufweist und diese zum Senden bzw. Empfangen zur Bestimmung nutzt.

9. Verfahren nach einem der vorstehenden Ansprüche, wobei das Verfahren das Gewähren eines der Zugang oder einer Freigabe und/oder das Ausführen einer angefragten Handlung oder Aktion und/oder das Unterlassen einer Alarmierung oder Sperrung beinhaltet, sofern zumindest das Ergebnis der Bestimmung mindestens eine vorbestimmte Anforderung erfüllt und/oder der Zugang oder die Freigabe verwehrt wird, die angefragte Handlung oder Aktion nicht vorgenommen und/oder eine Alarmierung oder Sperrung vorgenommen wird, falls mindestens eine sich in den Funksignalen, insbesondere des ersten Objekts, niederschlagende vorbestimmte Eigenschaft des ersten Objekts eine vorbestimmt Abweichung von mindestens einer gespeicherten vorbestimmten Eigenschaft des ersten Objekt aufweist.

10. Verfahren nach einem der vorstehenden Ansprüche, wobei die gespeicherten vorbestimmten Eigenschaften des ersten und/oder zweiten Objekts zumindest teilweise missachtet und/oder gelöscht werden, falls die Bestimmung zwischen den Objekten eine vorbestimmte Anzahl von Versuchen überschreitend scheitert.

11. Verfahren nach einem der vorstehenden Ansprüche, wobei gespeicherte vorbestimmte Eigenschaften genutzt werden, die Bestimmung und/oder die ihr zugrunde liegenden Messungen mittels der Funksignale zu beschleunigen, energieeffizienter und/oder robuster gegen Umgebungseinflüsse auszugestalten, insbesondere sofern eins der Objekte präzisere Hardware aufweist als schlechtesten falls anzunehmen, insbesondere durch Auslassen von Frequenzen, Antennenpfaden und/oder Berechnungen.

12. Verfahren nach einem der vorstehenden Ansprüche, wobei zur Bestimmung mindestens ein mithörendes, insbesondere passives, drittes Objekt verwendet wird, das die Funksignale zwischen dem ersten und dem zweiten Objekt empfängt und Messungen an den empfangenen Funksignalen durchführt, wobei die Messungen bei der Bestimmung unter Berücksichtigung mindestens einer gespeicherten vorbestimmten Eigenschaft des ersten, zweiten und/oder dritten Objekts berücksichtigt werden.

13. Transceiver, insbesondere Keyfob, Mobiltelefon und/oder Teil eines Zugangsbeschränkungssystems, insbesondere eines Fahrzeuges, aufweisend eine Funkschnittstelle und eine Recheneinheit sowie eine Speichereinheit und insbesondere eine Kommunikationsschnittstelle, insbesondere aufweisend eine weitere Funkschnittstelle, eingerichtet zur Durchführung des Verfahrens nach einem der vorstehenden Ansprüche, insbesondere mit einem identischen Transceiver.

14. System, insbesondere, Zugangsbeschränkungssystem, insbesondere eines
Fahrzeuges, aufweisend mindestens einen Transceiver und/oder eine Mehrzahl von Sende- und/oder Empfangsvorrichtungen eingerichtet zur Durchführung des Verfahrens, insbesondere mit einem Transceiver nach dem vorstehenden Anspruch.

15. Gruppe von mindestens zusammen drei, insbesondere mindestens vier,
Transceiver(n) und/oder System(en) nach einem der vorstehenden Ansprüche eingerichtet zur paarweisen Durchführung des Verfahrens.
